# EUROPEAN PATENT APPLICATION

(11) **EP 3 416 059 A1**
(43) Date of publication of application: **19.12.2018**
(21) Application number: 17176452.5
(22) Date of filing: 16.06.2017
(51) Int. Cl.: G06F 11/07

(54) **HARDWARE WATCHDOG CIRCUIT AND METHOD**

(71) Applicant: Vestel Elektronik Sanayi ve Ticaret A.S., 45030 Manisa (TR)
(72) Inventor: ERDENER,, Suleyman, 45030 Manisa (TR); TÜZÜN,, Levent, 45030 Manisa (TR)
(74) Representative: Flint, Adam

(57) **Abstract**

A hardware watchdog circuit (20) monitors a device (10). The hardware watchdog circuit (20) has an input (22) for receiving an input signal from the device (10) and an output (24) for outputting a reset signal to the device (10). The hardware watchdog circuit (20) is capable of generating the reset signal to be output to the device (10) to cause the device (10) to reset. The hardware watchdog circuit (20) is arranged such that (i) no reset signal is output when an input signal from the device (10) is being received and (ii) a reset signal is output when an input signal from the device (10) is not being received.

## Description

### Technical Field

The present disclosure relates to a hardware watchdog circuit and a method of operating a hardware watchdog circuit.

### Background

Watchdog circuits, sometimes also called watchdog timers or simply "watchdogs", are used to enable recovery of a malfunction in some electronic circuit or device to which the watchdog circuit is connected. A conventional watchdog circuit runs a timer. If the timer elapses, then the watchdog circuit outputs a reset signal to the electronic circuit or device to which the watchdog circuit is connected to cause the electronic circuit or device to reset or restart. To prevent this, the electronic circuit or device periodically (i.e. at intervals less than the timer of the reset timer of the watchdog circuit) sends a restart signal to the watchdog circuit to restart the timer of the watchdog circuit. So, if the electronic circuit or device is operating normally, the timer of the watchdog circuit is periodically restarted and therefore the watchdog circuit does not issue a reset signal to the electronic circuit or device. On the other hand, if the electronic circuit or device fails or hangs or otherwise does not issue a restart signal to the watchdog circuit, then the watchdog circuit will issue a reset signal to the electronic circuit or device.

### Summary

According to a first aspect disclosed herein, there is provided a hardware watchdog circuit for connection to a device to be monitored, the hardware watchdog circuit comprising:
an input for receiving an input signal from a device to which the hardware watchdog circuit is connected in use;
an output for outputting a reset signal to a device to which the hardware watchdog circuit is connected in use; and
one or more circuit components for receiving the input signal and for generating a reset signal to be output at the output to a device to which the hardware watchdog circuit is connected in use to cause a said device to reset;
the one or more circuit components being constructed and arranged such that (i) no reset signal is output at the output when an input signal from a said device is being received at the input and (ii) a reset signal is output at the output when an input signal from a said device is not being received at the input.

In example, there is no need for the hardware watchdog circuit to be reset periodically by the device as in the prior art. This enables less expensive and simpler components to be used for the hardware watchdog circuit in examples.

The device to be monitored may be for example a microcontroller, an application-specific integrated circuit (ASIC), a field-programmable gate array (FPGA), a custom solid-state device, etc.

For completeness, it is mentioned here that the hardware watchdog circuit might be constructed such that there is a delay following first receipt of an input signal from a device during which no reset signal is output. This is to allow the device to fully start and boot up. In such a case, the operation described above takes place during "normal" operation of the device and the hardware watchdog circuit, i.e. not during start-up of the device. This is discussed further below.

In an example, the one or more circuit components consist only of passive components and optionally one or more diodes and optionally one or more transistors. The passive components may be for example resistors and capacitors. There may be also be one or more diodes, depending on for example the circuit arrangement and the nature of the input signal received from the device. There may be also be one or more transistors, depending on for example the circuit arrangement and the nature of the input signal received from the device. Importantly, there is no integrated circuit or, more generally, no device that is running software or firmware in the hardware watchdog circuit.

In an example, the one or more circuit components are constructed and arranged to receive a said input signal in which said input signal is a pulse width modulation PWM signal and to generate no reset signal when a PWM signal is being received at the input and to generate a reset signal when a PWM signal is not being received at the input.

In an example, the hardware watchdog circuit comprises a timing circuit constructed and arranged to delay output of a reset signal for a time period. This may be used to prevent a reset signal being output whilst the device to which the hardware watchdog circuit is connected is booting or starting up. Alternatively or additionally, this may be used to provide a delay before a reset signal is output following the time when an input signal from a said device is not being received at the input. There may therefore be two timing circuits, one for use when the device to which the hardware watchdog circuit is connected is booting or starting up and the other for use to provide a delay before a reset signal is output. The or each timing circuit may be a simple timing circuit, such as an RC circuit comprising or consisting of one or more resistors and one or more capacitors.

According to a second aspect disclosed herein, there is provided a method of operating a hardware watchdog circuit and a device that is being monitored by the watchdog circuit to which the watchdog circuit connected, the method comprising:
the device to be monitored outputting a signal which is received as an input signal at the hardware watchdog circuit, the hardware watchdog circuit receiving the input signal and not outputting a reset signal; and
in the case that the device to be monitored does not output a signal to the hardware watchdog circuit, the hardware watchdog circuit generating a reset signal and outputting the reset signal to the device to which the hardware watchdog circuit is connected to cause the device to reset.

In an example, the hardware watchdog circuit comprises one or more circuit components which consist only of passive components and optionally one or more diodes and optionally one or more transistors.

In an example, the signal which is output by the device is a pulse width modulation PWM signal. In an example, the PWM signal output by the device is also provided to a component of the device to control operation of the component.

In an example, the method comprises delaying output of a reset signal for a time period whilst the device to which the hardware watchdog circuit is connected is booting or starting up.

In an example, the method comprises delaying output of a reset signal for a time period following the time when an input signal from the device is not being received at the hardware watchdog circuit.

### Brief Description of the Drawings

To assist understanding of the present disclosure and to show how embodiments may be put into effect, reference is made by way of example to the accompanying drawings in which:
Figure 1 shows schematically an example of a hardware watchdog circuit and two devices;
Figure 2 shows schematically an example of a hardware watchdog circuit; and
Figure 3 shows timing diagrams for various signals/voltages.

### Detailed Description

Conventional watchdog circuits, sometimes also called watchdog timers or simply "watchdogs", are described briefly above. Conventional watchdog circuits typically have at least an integrated circuit for overall control of the watchdog circuit and a timer circuit (which may be provided as part of the functionality of the integrated circuit in some examples) for providing the timer of the watchdog circuit. However, the use of an integrated circuit and optionally a separate timer circuit increases the cost of the watchdog circuit. Use of an integrated circuit also adds to the complexity as the integrated circuit requires programming, whether using for example software or firmware or hard coding in an application-specific integrated circuit (ASIC) or field-programmable gate array (FPGA) or the like.

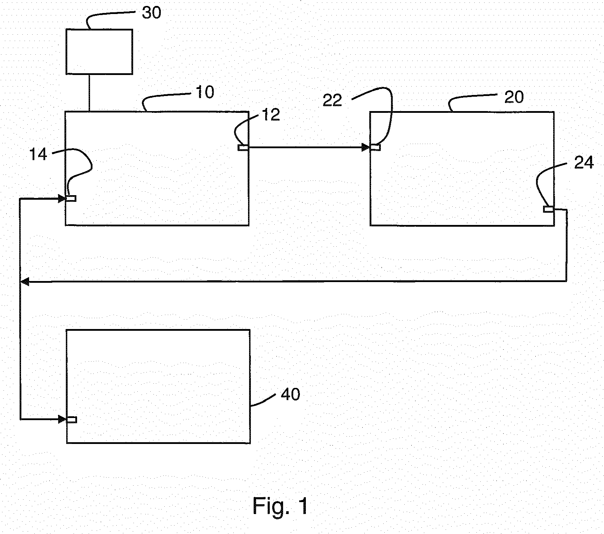

Referring to Figure 1, there is shown a circuit or device 10 and a hardware watchdog circuit 20 for monitoring the circuit or device 10. The device 10 is electrically connected to the hardware watchdog circuit 20 so that the device 10 and hardware watchdog circuit 20 can pass signals to each other. The device 10 has an output 12 and the hardware watchdog circuit 20 has an input 22 for this purpose. The device 10 has an input 14 for receiving a reset or restart signal from the hardware watchdog circuit 20, which is output by the hardware watchdog circuit 20 at an output 24. The output 12 and input 14 of the device 10 may be a single input/output connection or separate connections as shown. Likewise, the input 22 and output 24 of the hardware watchdog circuit 20 may be a single input/output connection or separate connections as shown.

The device 10 may be or have one or more processors, or may be or have a microcontroller or the like. The device 10 may have one or more memories for storing data, which may be persistent memories for storage of data. The device 10 may have one or more memories for storing program instructions and data during execution of a computer program by the device 10, which may be volatile memories.

The device 10 and the hardware watchdog circuit 20 are arranged such that when the device 10 is operating normally, it continually outputs a signal to the hardware watchdog circuit 20. It should be noted here that the signal need not be a continuous signal (i.e. a signal that is constantly output) and may be for example a signal that is repeated (at a sufficiently high frequency). Examples of this are discussed further below. When the hardware watchdog circuit 20 receives the signal output by the device 10 being monitored, the hardware watchdog circuit 20 operates such that it does not output a reset or restart signal to the device 10 being monitored.

On the other hand, if the device 10 being monitored does not operate correctly, then the device 10 does not output the signal to the hardware watchdog circuit 20. This may occur because for example the device 10 has "hung" or "crashed", that is, software or firmware on the device 10 ceases to operate correctly, possibly because of a bug or fault, causing the device 10 to cease functioning correctly, and therefore preventing the device 10 outputting the signal to the hardware watchdog circuit. As another example, the device 10 may continually monitor some critical parameter or variable or the like and cause the device 10 not to output the signal to the hardware watchdog circuit 20 if an error is detected. When the hardware watchdog circuit 20 does not receive this signal normally output by the device 10 being monitored during normal operation, the hardware watchdog circuit 20 operates to output a reset or restart signal to the device 10 being monitored. This causes the device 10 to reset or restart. It may be noted that in some examples, if the hardware watchdog circuit 20 does not receive this signal normally output by the device 10, then the hardware watchdog circuit 20 will continue to output or will repeat the reset signal to the device 10 until the device 10 has restarted and is operating correctly.

Accordingly, in contrast to prior art arrangements, the hardware watchdog circuit 20 described herein operates not to output a reset or restart signal to the device 10 when the hardware watchdog circuit 20 is receiving the signal from the device 10 and the hardware watchdog circuit 20 described herein operates to output a reset or restart signal to the device 10 when the hardware watchdog circuit 20 is not receiving the signal from the device 10. There is for example no need for the hardware watchdog circuit 20 to be reset periodically by the device 10 as in the prior art.

An advantage of this is that it enables simpler, and therefore less expensive, components to be used in the hardware watchdog circuit 20. The hardware watchdog circuit 20 may for example have one or more circuit components that consist only of passive components and optionally one or more diodes and optionally one or more transistors. The passive components may be for example resistors and capacitors. There may be also be one or more diodes, depending on for example the circuit arrangement and the nature of the input signal received from the device 10. There may be also be one or more transistors, depending on for example the circuit arrangement and the nature of the input signal received from the device 10. Importantly, there is no integrated circuit or, more generally, no device that is running software or firmware in the hardware watchdog circuit 20.

The hardware watchdog circuit 20 nay have one or more timing circuits for delaying output of a reset signal for a time period. This may be used for example to prevent a reset signal being output whilst the device 10 to which the hardware watchdog circuit 20 is connected is booting or starting up, or at least until voltages in the device 10 have stabilised following start up. Alternatively or additionally, this may be used to provide a delay before a reset signal is output following the time when an input signal from the device 10 is not being received at the input. There may therefore be two timing circuits, one for use when the device 10 to which the hardware watchdog circuit 20 is connected is booting or starting up and the other for use to provide a delay before a reset signal is output. The or each timing circuit may be a simple timing circuit, such as an RC circuit comprising or consisting of one or more resistors and one or more capacitors.

As indicated in Figure 1, the device 10 being monitored may be controlling some other components or device 30 or the like. It is convenient in such a case for the signal that is being sent to the hardware watchdog circuit 20 is a signal that the device 10 is already sending to the other device 30.

As a particular example, the device 10 may be part of a display screen that uses backlights to illuminate display elements of the display screen. A specific example is a so-called "LED" display device which uses plural LEDs (light emitting diodes) as backlights for LCD (liquid crystal display) display elements. In such a case, as is known the device 10 sends a PWM (pulse width modulation) signal to the LEDs to control the brightness of the LEDs. The hardware watchdog circuit 20 may be arranged to receive the same PWM signal and operate as described above to reset or restart the device 10 if the PWM signal is not received for any reason.

In another example, the reset signal output by the hardware watchdog circuit 20 may also be passed to one or more other devices 40 (one being shown by way of example in Figure 1).

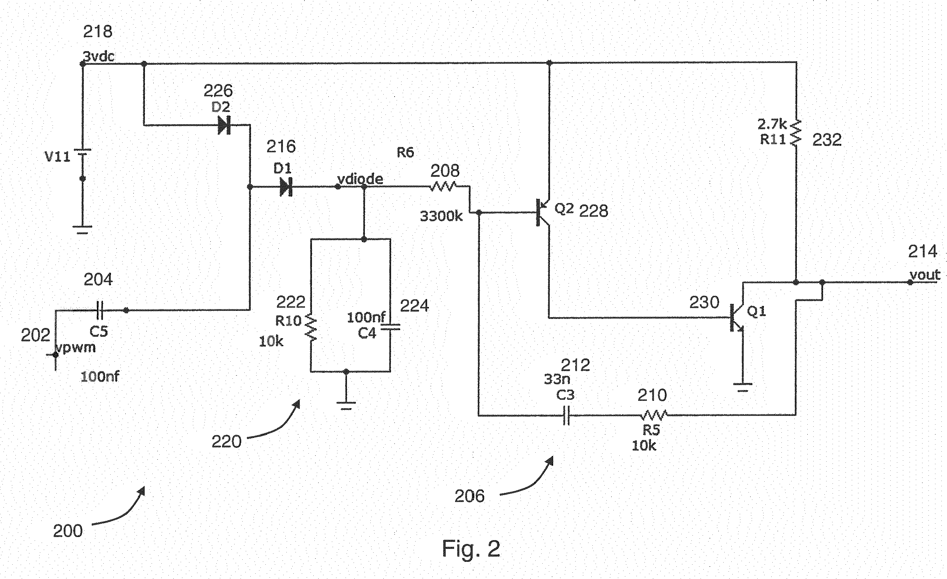

An example of the construction and operation of a hardware watchdog circuit 200 will be described with reference to Figure 2. It will be understood that the hardware watchdog circuit 200 of Figure 2 is one example only and that other arrangements for the hardware watchdog circuit 200, with different components and/or different modes of operation, may be used.

In this example, the hardware watchdog circuit 200 is configured to receive a pulse width modulation (PWM) signal vpwm at an input 202. The PWM signal vpwm may be received from the microcontroller or other device 10 that is being monitored by the hardware watchdog circuit 200. As discussed further below, the PWM signal vpwm may be generated by the microcontroller or other device 10 in order to drive or control some other device or devices. This example therefore makes use of that same PWM signal, leading to efficiencies and simplicity in the circuits.

Any DC offset of the PWM signal vpwm may be removed. The removal of the DC offset may be performed using for example a series capacitor 204 to which the incoming PWM signal vpwm is passed.

The PWM signal vpwm is passed to a first timing circuit 206. The first timing circuit 206 may be provided using an RC arrangement. For example, the first timing circuit 206 may comprise one or more resistors 210 in series with a capacitor 212. The RC timing constant τ of the first timing circuit 206 is τ1 = RC where R is the resistance of the resistor 210, and C is the capacitance of the capacitor 212. The first timing circuit 206 is provided to keep the output voltage at the output 214 of the hardware watchdog circuit 200 low (a logical 0) for a time period τ1= R5 (resistor 210) x C3 (capacitor 212). This time period τ1 is at least in part to enable the monitored device 10 to initially reset before the hardware watchdog circuit 200 becomes operational.

The first timing circuit 206 may be arranged so that the timing constant τ1 is adjustable. The timing constant τ1 may be adjusted using, for example, one or more of a variable resistor or adjustable capacitor.

The PWM signal vpwm may be provided to the first timing circuit 206 via a diode 216.

Once the duration of the timing constant τ1 of the first timing circuit 206 elapses, the first timing circuit 206 operates such that a logical 1 (a high voltage) is output at the output 214 of the hardware watchdog circuit 200. The logical 1 at the output of the hardware watchdog circuit 200 effectively indicates that the monitored device 10 is operating as expected and does not need to reset or restart.

If the monitored device 10 is not operating correctly to output the PWM signal vpwm, the hardware watchdog circuit 200 operates as follows. A source voltage 218 provides a voltage to a second timing circuit 220. The second timing circuit 220 may be provided using an RC circuit. For example, the second timing circuit 220 may comprise a resistor 222 and a capacitor 224. The RC timing constant τ of the second timing circuit 220 is τ2 = RC where R is the resistance of the resistor 222 and C is the capacitance of the capacitor 224. The second timing circuit 220 may be arranged so that the timing constant τ2 is adjustable. The timing constant τ2 (τ2=R10 (resistor 222) x C4 (capacitor 224)) may be adjusted using, for example, one or more of a variable resistor or adjustable capacitor. The timing constant τ2 corresponds to a time delay before the reset block 206 is activated after the PWM signal is shut down or otherwise no longer being produced by the monitored device 10.

The source voltage 218 may be provided to the second timing circuit 220 via a first diode 226 and the diode 216 mentioned above in series.

In the absence of a PWM signal vpwm at the input 220, then once the duration of the timing constant τ2 of the second timing circuit 220 elapses, the second timing circuit 220 may trigger an electronic switch 228. The electronic switch 228 may be provided by for example a transistor 228. The transistor 228 may be protected by a current limiting device such as, for example, the resistor 208.

In some embodiments, the transistor 228 is part of a Darlington pair arrangement with a second transistor 230. The Darlington pair arrangement operates such that the current provided by the first transistor 228 is amplified by the second transistor 230. This configuration may be used to provide a higher current gain than can be provided by each transistor 228, 230 individually. A high current gain may be desirable to reduce the load of the hardware watchdog circuit 200, which helps to minimise the current drawn by the hardware watchdog circuit 200. Minimising the current drawn by the hardware watchdog circuit 200 may reduce the energy consumption of the hardware watchdog circuit 200 and may allow the use of smaller low power components. A resistor 232 is provided between the source voltage 218 and the output 214 of the hardware watchdog circuit 200 to hold the output of the hardware watchdog circuit 200 at a high value when the second transistor 230 is not switched on.

In this example, once the first transistor 228 triggered, this triggers the second transistor 230. This operates in effect to short circuit the output 214 of the hardware watchdog circuit 200. As a result, the hardware watchdog circuit 200 outputs a logic 0. By way of example logic 0 may be at or close to 0 volts. This is passed to the monitored device 10. The monitored device circuit 10 is in this example configured to reset or restart upon receipt of a logic level 0.

The hardware watchdog circuit 200 which in this example is active low reset may be configured to meet any reset logical level specifications of one or more monitored circuits 10.

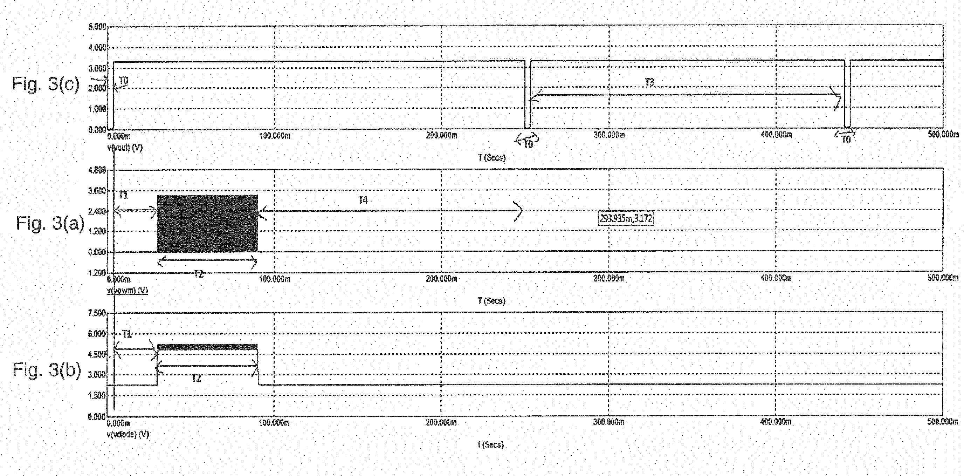

Figure 3 shows timing diagrams for various signals/voltages of the example of Figure 2.

Fig. 3(a) shows the signal being output by the device 10 being monitored. In this example, there is a first period of time T1 when no signal is being output by the device 10. In this example, this corresponds to when the device 10 has just been started and is booting up. This is followed by a period T2 when the device 10 is outputting the signal. In this case, the signal is a PWM signal as discussed above. The time T4 in Fig. 3(a) corresponds to the timing constant τ2 discussed above, namely the time delay between the first timing circuit 206 being activated after the PWM signal no longer being sent by the monitored device 10.

Fig. 3(b) shows the voltage output provided to the first timing circuit 206 by the diode 216 of the example above.

Finally, Fig. 3(c) shows the output of the hardware watchdog circuit (at the output 214 of the example hardware watchdog circuit 200 discussed above). As can be seen, there is a first period of time T0 which corresponds to the time constant τ1 of the first timing circuit 206 of the specific example discussed above and which enables the monitored device 10 to initially reset before the hardware watchdog circuit 200 becomes operational. This is to enable the device 10 to start and fully boot up, including allowing voltages and the like to settle.

There is then a total period of time = T1 + T2 + T4 during which the hardware watchdog circuit 200 outputs a DC high voltage or logical 1, which, in this example, effectively indicates that the monitored device 10 is operating as expected and does not need to reset or restart. As mentioned above, T1 is a first period of time T1 when no signal is being output by the device 10 which, in this example, corresponds to when the device 10 has just been started and is booting up; T2 is the time when the device 10 is outputting the signal, which in this case is a PWM signal; and T4 is the timing constant τ2 which is a time delay before the first timing circuit 206 is effectively activated after the PWM signal is shut down or otherwise no longer being produced by the monitored circuit 10. At the end of this total period of time = T1 + T2 + T4, because no PWM signal has been received, the hardware watchdog circuit 200 outputs a DC low voltage or logical 0, which, in this example, effectively indicates that the monitored device 10 is not operating as expected and needs to be reset or restarted. This is output for the time period T0.

In the example shown, following this outputting of a DC low voltage or logical 0, the monitored device 10 has not output a PWM signal to the hardware watchdog circuit 200 (compare with Fig. 3(a)). Thus, after a period of time T3, the hardware watchdog circuit 200 again outputs a DC low voltage or logical 0 to try to cause the monitored device 10 to reset. This is repeated as necessary until a successful restart or reboot of the monitored device 10 has been achieved. The time T3= τ1 x resistance of the resistor R208 is slightly longer than the total boot-up time T0+T1 allow for a margin of error and for slight delays that may occur during start-up of the device 10.

The examples described herein are to be understood as illustrative examples of embodiments of the invention. Further embodiments and examples are envisaged. Any feature described in relation to any one example or embodiment may be used alone or in combination with other features. In addition, any feature described in relation to any one example or embodiment may also be used in combination with one or more features of any other of the examples or embodiments, or any combination of any other of the examples or embodiments. Furthermore, equivalents and modifications not described herein may also be employed within the scope of the invention, which is defined in the claims.

## Claims

1. A hardware watchdog circuit for connection to a device to be monitored, the hardware watchdog circuit comprising:
an input for receiving an input signal from a device to which the hardware watchdog circuit is connected in use;
an output for outputting a reset signal to a device to which the hardware watchdog circuit is connected in use; and
one or more circuit components for receiving the input signal and for generating a reset signal to be output at the output to a device to which the hardware watchdog circuit is connected in use to cause a said device to reset;
the one or more circuit components being constructed and arranged such that (i) no reset signal is output at the output when an input signal from a said device is being received at the input and (ii) a reset signal is output at the output when an input signal from a said device is not being received at the input.

2. A hardware watchdog circuit according to claim 1, wherein the one or more circuit components consist only of passive components and optionally one or more diodes and optionally one or more transistors.

3. A hardware watchdog circuit according to claim 1 or claim 2, wherein the one or more circuit components are constructed and arranged to receive a said input signal in which said input signal is a pulse width modulation PWM signal and to generate no reset signal when a PWM signal is being received at the input and to generate a reset signal when a PWM signal is not being received at the input.

4. A hardware watchdog circuit according to claim 3, comprising a timing circuit constructed and arranged to delay output of a reset signal for a time period.

5. A method of operating a hardware watchdog circuit and a device that is being monitored by the watchdog circuit to which the watchdog circuit connected, the method comprising:
the device to be monitored outputting a signal which is received as an input signal at the hardware watchdog circuit, the hardware watchdog circuit receiving the input signal and not outputting a reset signal; and
in the case that the device to be monitored does not output a signal to the hardware watchdog circuit, the hardware watchdog circuit generating a reset signal and outputting the reset signal to the device to which the hardware watchdog circuit is connected to cause the device to reset.

6. A method according to claim 5, wherein the hardware watchdog circuit comprises one or more circuit components which consist only of passive components and optionally one or more diodes and optionally one or more transistors.

7. A method according to claim 5 or claim 6, wherein the signal which is output by the device is a pulse width modulation PWM signal.

8. A method according to claim 7, wherein the PWM signal output by the device is also provided to a component of the device to control operation of the component.

9. A method according to any of claims 5 to 8, comprising delaying output of a reset signal for a time period whilst the device to which the hardware watchdog circuit is connected is booting or starting up.

10. A method according to any of claims 5 to 9, comprising delaying output of a reset signal for a time period following the time when an input signal from the device is not being received at the hardware watchdog circuit.
